# EUROPEAN PATENT APPLICATION

(11) **EP 4 711 955 A1**
(43) Date of publication of application: **18.03.2026**
(21) Application number: 24306510.9
(22) Date of filing: 13.09.2024
(51) Int. Cl.: G06F 21/30, G06F 21/34, H04L 9/40

(54) **VERIFICATION OF A WEB PORTAL BASED ON A TOKEN**

(71) Applicant: THALES DIS FRANCE SAS, 92190 Meudon (FR)
(72) Inventor: GU, Yajin, 128795 Singapore (SG)
(74) Representative: Grevin, Emmanuel

(57) **Abstract**

The invention provides a method of verification of a web portal accessed by a terminal comprising a card communication interface arranged for communicating with a card storing card information, the card information being also stored in association with user identification data of the user by a trusted server, the method comprising:
- in response to a user identification request received (209) from the web portal, transmitting (216), user identification data to the web portal;
- upon reception (224), from the web portal, of a token, requesting (225), by the terminal, the user to allow communication between the card and the terminal;
- after establishment (227) of a communication between the card and the terminal, transmitting (228), the token to the card for verification (230) based on the stored card information;
- receiving (231) a verification result from the card;
- displaying (232) the verification result.

## Description

This invention is related to the field of verification of a web portal for ensuring a high level of security when providing sensitive information to the web portal.

The invention is useful in particular, but not exclusively, in the context of the access to a user's account via a bank portal or banking application or in the context of a payment to a third party via a payment portal.

Currently, end users do not have a sufficient expertise to distinguish fake web portals, such as bank applications or portals or fake payment portals, from genuine ones.

In addition, fake portals are getting more and more realistic, which makes the verification task even harder for end users.

The end users may therefore provide sensitive information such as personal credentials or credit card information to a fraudulent third party, which may then make a malicious usage of these information.

There is therefore a need to provide a solution for verifying a portal before providing any sensitive information to it.

The invention aims at improving the situation.

A first aspect of the invention concerns a method of verification of a web portal accessed by a terminal of a user, the terminal comprising a card communication interface arranged for communicating with a card of the user comprising a chip, the card being external to the terminal and storing card information in the chip, the card information being also stored in association with user identification data of the user by a trusted server:
- in response to a user identification request received from the web portal, transmitting, by the terminal, user identification data to the web portal;
- upon reception, by the terminal and from the web portal, of a token, requesting, by the terminal, the user to allow communication between the card and the terminal;
- after establishment of a communication between the card and the terminal, transmitting, by the terminal, the token to the card for verification based on the stored card information;
- receiving, by the terminal, a verification result from the card;
- providing, by the terminal, the verification result to the user.

The invention enables to verify a web portal, using a chip card that is owned by a user and that is associated with a trusted server. The card can for example be a bank card. Such a verification can be performed before providing any sensitive data to the web portal, which enables to ensure that the sensitive data is manipulated by a trusted web portal. The web portal can for example be a bank portal or a payment portal of a service or good provider.

According to some embodiments of the invention, before receiving the user identification request from the web portal, the terminal may receive a human verification test from the web portal, the terminal may display the human verification test, and transmits a result of the human verification test to the web portal; and the user identification request may be received from the web portal if the human verification test is positive.

This enables to avoid a fake terminal and user (replaced by an automated machine) to perform machine request to obtain a genuine token.

In complement, the human verification test may comprise a one time password visual representation, the terminal may display the visual representation and may receive a one time password via an input from the user.

Using a one time password enables to avoid a fake terminal (replaced by an automated machine) to perform machine request to obtain a genuine token, in a simple and efficient way.

According to an embodiment (named first embodiment in what follows), upon receiving of the user identification request, the terminal may request the user to allow a first communication between the card and the terminal and, after establishment of the first communication, the terminal may receive the user identification data from the card. Upon reception of the token, the communication, which is requested to be allowed by the user, may be a second communication between the card and the terminal.

Therefore, the user identification data is obtained from the card, which facilitates the verification process for the user, as the user does not have to manually input the user identification data.

In complement, after establishment of the first communication, the terminal may transmit the one time password to the card for storage in the card. The terminal may transmit the token to the card for verification based at least on the stored card information and on the one time password, to determine the verification result.

Using the one time password to verify the token enables to ensure that the token is uniquely provided for a given session: it ensures protection against a replay attack.

Alternatively or in complement, after establishment of the first communication, the terminal may receive the user identification data and a card challenge from the card. The terminal may transmit, in response to the user identification request, the user identification data and the card challenge to the web portal and the terminal may transmit the token to the card for verification based at least one the card information and the card challenge.

The card challenge may be uniquely generated by the card, which enables to make the token only verifiable by the card requesting the token for verification, and unique for a given session. This enables to protect the web portal verification against relay and replay attacks.

In complement, the terminal may receive the card challenge with a Message Authentication Code, from the card.

This enables the trusted server to authenticate and to check the integrity of the card challenge, which reinforces the security associated with the verification process. This also enables to check that the card providing the card challenge is the same as the card corresponding to the card information.

According to some embodiments, upon reception of the user identification data, the web portal may transmit a token request to the trusted server, the token request comprising the user identification data, and the web portal may receive the token in response to the token request.

Therefore, the invention does not require involvement of a third party, as the web platform obtains the token from the trusted server associated with the card of the user.

Still in complement, upon reception of the token request, the trusted server may retrieve the card information associated with the user identification data, generate the token based at least on the card information and transmit the token to the web portal in response to the token request.

Therefore, the token is generated based on a secret (i.e. the card information) shared by the trusted server and the card, which enables to ensure that the token is generated by a trusted entity and verified by the legitimate card.

In complement, the trusted server may encrypt the generated token based on a first key of a keypair associated with the retrieved card information. The trusted server may transmit the encrypted token to the web portal and the card may decrypt the encrypted token before verifying the token, based on a second key of the keypair, the second key being stored by the card.

Encryption using the first key enables to ensure that the token can only be decrypted by the corresponding second key stored by the card of the genuine user. For example, the first key may be a public key of the card, in which case the second key is the private key, which is known by the card only. Alternatively, the first key and the second key may form a 3DES (Triple Data Encryption Standard) keypair or AES (Advanced Encryption Standard) keypair shared by the card and the trusted server. This alternative is even more secure as it ensures that only the trusted server can encrypt the generated token.

Alternatively or in complement, the trusted server may generate the token based at least on the card information and on the card challenge.

This enables to ensure that the token can only be verified by the card which is the one associated with the card information and which is the one having generated the card challenge included in the token request.

In complement, the token request may comprise the one time password, and the trusted server may generate the token based on the card information, the card challenge and the one time password.

This enables to issue a token, that is unique (based on the one time password), and that can only be verified by the genuine card, if this genuine card has generated the card challenge.

A second aspect of the invention concerns a computer program comprising instructions arranged for implementing the method according to some embodiments of the first aspect of the invention, when said instructions are executed by a processor.

A third aspect of the invention concerns a terminal comprising a network interface configured for communicating with a web portal via an extended network and comprising a card communication interface arranged for communicating with a card of the user, the card being external to the terminal and storing card information, the card information being also stored in association with user identification data of the user by a trusted server; wherein the terminal further comprises a processor configured for:
- in response to a user identification request received from the web portal, transmitting user identification data to the web portal;
- upon reception, from the web portal, of a token, requesting the user to allow communication between the card and the terminal via a user interface of the terminal;
- after establishment of a communication between the card and the terminal, transmitting the token to the card for verification based on the stored card information;
- receiving a verification result from the card;
- providing, via the user interface, the verification result to the user.

A fourth aspect of the invention concerns a system comprising a terminal according to the third aspect of the invention, the card comprising a chip storing the card information, the trusted server storing in association the card information and the user identification data, and configured for generating the token, and the web portal.

Unless otherwise defined, all terms (including technical and scientific terms) used herein are to be interpreted as is customary in the art. It will be further understood that terms in common usage should also be interpreted as is customary in the relevant art and not in an idealised or overly formal sense unless expressly so defined herein.

In this text, the term "comprises" and its derivations (such as "comprising", etc.) should not be understood in an excluding sense, that is, these terms should not be interpreted as excluding the possibility that what is described and defined may include further elements, steps, etc.

### Brief description of the drawings:

[Fig. 1] shows a system for verifying a web portal, according to some embodiments of the invention;
[Fig. 2] illustrates the steps of a method for verifying a web portal, according to some embodiments of the invention;
[Fig. 3] illustrates the structure of a terminal according to some embodiments of the invention.

### Detailed description

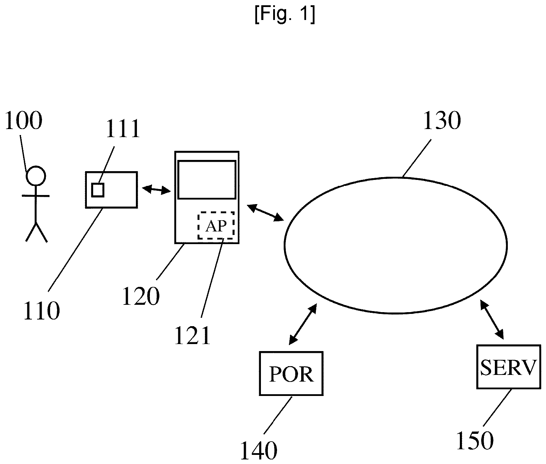

Figure 1 shows a system 10 for verifying a portal 140 according to some embodiments of the invention.

The system 10 according to the invention comprises a user terminal 120 belonging to a user 100.

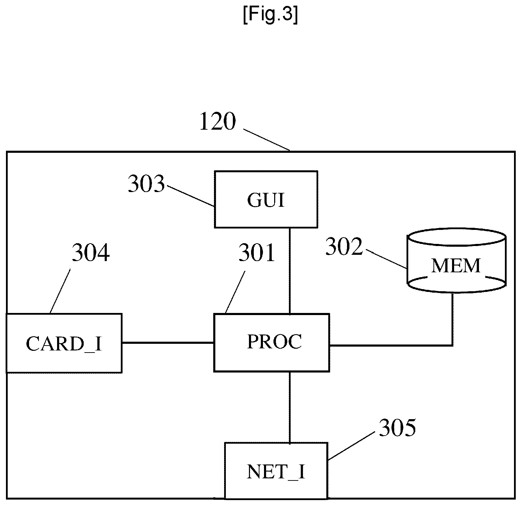

The user terminal 120 encompasses any terminal having communication interfaces for exchanging information with external entities, a user interface and computing capabilities, such as a Smartphone, a desktop computer, a laptop, a touchpad, etc. The structure of the user terminal 120 is described in what follows referring to figure 3.

The user terminal 120 is arranged to access to a network 130, which can be an extended network such as an IP network, thereby allowing communications with remote entities of the system 10. The IP network can be accessed via a mobile access network, via any mobile technology such as 3G, 4G, 5G, for example, or via a local access network, such as a wifi network, for example a domestic network of the user 100.

According to the invention, the user 100 uses the user terminal 120 to access a web portal 140 via a browser executed on the user terminal 120 or via an application 121 executed on the user terminal 120.

The web portal 140 can for example be:
- a bank portal associated with a bank of the user 100. The bank portal can provide an access to the bank account, or bank accounts, of the user and can enables the user 100 to perform some financial operations. The bank portal can be accessed via the browser or via a bank application 121 provided by the bank of the user 100;
- a payment portal displayed after the user 100 attempted to purchase an item on a given website. The payment portal may be requesting financial credentials of the user 100 to allow a payment to a third party associated with the website.

The user 100 can download and execute the application 121 on the user terminal 120. When executing the application 121, the user 100 may be requested to provide sensitive information, such as personal information or financial information such as credit card information, to access to a service via the web portal 140. This is the case when the application 121 is a banking application, and the web portal 140 is a bank portal, for example.

It is of high importance for the user to make sure that the web portal 140, and the associated application 121 in some embodiments, can be trusted (e.g. is the true application or web portal of the user's bank), before providing any sensitive information to it or to them.

To this end, the system 10 according to the invention further relies on the following elements:
- a card 110, such as a banking card, of the user 100, comprising a chip 111 with a processing unit arranged to perform at least some cryptographic operations, and read and/or write operations in a secure storage of the chip;
- a trusted server 150 which is associated with an issuer, a manufacturer or a card scheme of the card 110, the trusted server 150 storing associations between card information and user identification information. In particular, it can store, among others, an association between user identification data of the user 100 and card information related to the card 100. For example, the trusted server 150 can be a bank server associated with the bank of the user 100, or can be a server of the card scheme associated with the card 110, which may be a local scheme or a global scheme.

The card information can therefore be secret information stored in the card 110 and also in the trusted server 150 in association with user identification data of the user 100. Preferably, the card information is only known by the card 110 and the trusted server 150.

The card information may comprise:
- a predefined value in a given format;
- a predefined message, preset by the user 100 when registering with the bank or with the card scheme associated with the trusted server 150; and/or
- a last debit amount or debit timing of the card 110.

The user identification data may comprise any combination of information that is proper to the user, such as name, surname, customer identifier, alias, address, bank account number, and so on. The user identification data is uniquely identifying the user 100 for the trusted server 150: this means the trusted server 150 can identify the user based on the user identification information.

The terminal 120 is configured to communicate with the card 110 via a card communication interface, which is preferably a wireless interface, based on short or medium range wireless technologies, such as Near Field Communication, NFC, for example. The card communication interface of the terminal 120 may be implemented by a mobile application (different from the application 121 described above) or may be a function integrated in the terminal 120, for example natively integrated in the operating system of the terminal 120. The communication between the card communication interface and the card 110 may be based on APDU (Application Protocol Data Unit) sequences.

Alternatively, the card communication interface may be a card reader connected to the terminal 120.

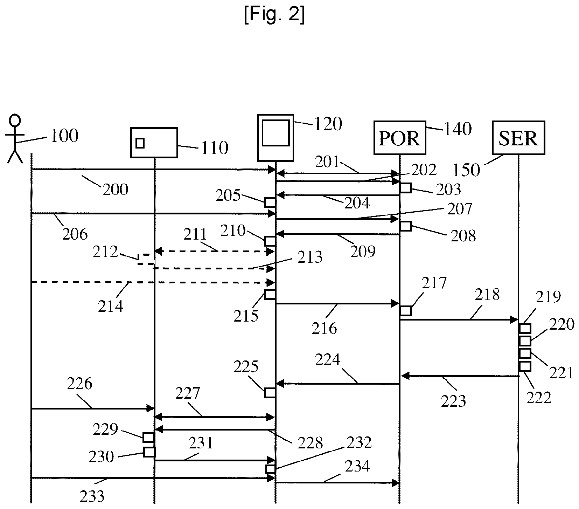

Figure 2 is a diagram showing the steps of a method for verification of a web portal according to some embodiments of the invention.

At a step 200, the user 100 manipulates the terminal 120, for example to open the application 121 or to open a browser on the device 120, so as to access to the web portal 140 via the IP network 130.

At a step 201, the terminal 120 establishes a communication session with the web portal 140. The principle of a session established is well known and is not further described in the present description. The established communication session may be a secure communication session.

At a step 202, the terminal 120 requests verification of the web portal 140. This step comprises sending a verification request to the web portal 140. A verification can be requested if the user 100 clicks on a given logo or button displayed by the web portal 140.

Upon reception of the verification request at step 202, the web portal 140 may generate, at a step 203, a human verification test, which may comprise:
- displaying a one time password visual representation. The one time password may be an alphanumeric string, such as a number, randomly generated by the web portal;
- displaying a CAPTCHA, Completely Automated Public Turing Test);
- any other known human verification test.

At a step 204, the human verification test is transmitted to the terminal 120, and is displayed by the terminal 120 at a step 205.

At a step 206, the user 100 provides a response to the human verification test, for example by manually inputting the OTP corresponding to the visual representation displayed on a screen of the terminal 120.

At a step 207, the response is transmitted by the terminal 120 to the web portal 140. The web portal 140 verifies the response at step 208, to determine whether the human verification test is positive or not.

If the human verification test is positive, the method goes on with step 209. Else, if the human verification test is negative, the communication session between the terminal 120 and the web portal 140 can be interrupted.

It is to be noted that the human verification test performed at steps 203 to 208 is optional. The human verification test however is beneficial in that it enables to avoid a fake terminal and user (replaced by an automated machine) to perform machine request to obtain a genuine token as described in what follows.

At a step 209, the web portal 140 transmits a user identification request to the terminal 120. According to some embodiments, the user identification request may comprise the previously entered one time password, which allows to uniquely identify the communication session with the web portal 140. Alternatively, instead of the OTP, the user identification request may comprise a timestamp associated with the communication session, for example a timestamp indicating the start of step 208.

At a step 210, the terminal 120 may display the user identification request, thereby requesting the user to provide user identification data. Preferably, the requested user identification data comprises data that enables the server 150 to uniquely identify the user 100. The user identification data does not necessary comprise sensitive data such as Personal Identifiable Information, PII. The user identification data may be a customer identifier, such as a nickname or username that is pre-agreed with the trusted server 150 or partial elements of a bank account number, which enables the trusted server 150 to identify a bank account number of the user, without revealing the whole bank account number.

According to a first embodiment, step 210 consists in requesting the user to allow a first communication between the card 110 and the card communication interface. Then, the user 100 provides the user identification data by allowing a communication between the card communication interface of the terminal 120 and the card 110, at a step 211. For example, the user may place the card 110 near the terminal 120, or in contact with the terminal 120. At step 211, a communication is therefore established between the card 110 and the terminal 120, the communication being actively triggered by the user 100.

At an optional step 212 of the first embodiment, the terminal 120 may provide the OTP or the timestamp included in the user identification request, to the card 110, and the card 110 may store the OTP or the timestamp in the secure storage of the card 110.

At step 213, the card 110 transmits to the terminal 120:
- user identification data stored in the card 110, such as, for example personal information (if not sensitive) related to the user 100 or preferably a nickname or username;
- optionally, a card challenge, which is an information uniquely generated by the card 110, which may have a validity duration. No restriction is attached to format of the card challenge, which can be an alphanumeric string or a number. The card challenge, once generated by the card 110, is also stored in the secure storage of the card, preferably in association with the previously stored timestamp or OTP.

The card challenge can be MACed, meaning that the card challenge is provided with a Message Authentication Code, MAC, appended to the end, as a signature, to allow an entity reading the card challenge, to verify the authenticity and integrity of the card challenge.

According to a second embodiment, the user 100 manually provides the user identification data via the user interface of the terminal, at a step 214, without the need to perform step 211 to 213 previously described.

At a step 215, the terminal 120 generates a response to the user identification request, the response comprising:
- the user identification data obtained at step 213 (first embodiment) or at step 214 (second embodiment);
- optionally the card challenge (or the MACed card challenge).

At step 216, the terminal 120 transmits the response to the web portal 140.

At step 217, upon reception of the response, the web portal 140 prepares a token request, the token request comprising:
- the user identification data comprised in the response;
- optionally the card challenge, the OTP and/or the timestamp.

At step 218, the web portal 140 transmits the token request to the trusted server 150. No restriction is attached to the way the web portal 140 identifies the trusted server 150 for transmission of the token request:
- in the example in which the web portal 140 is a bank portal or a portal associated with a bank application executed on the terminal 120, the web portal 140 and the trusted server 150 are both entities associated with the bank of the user 100, so that the address of the trusted server 150 can be stored in advance in the web portal 140;
- in the other example in which the web portal 140 is a payment portal, the trusted server 150 may be associated with a card scheme, among several local and global card schemes, which can be identified by the web portal 140 based on the response received at step 216, which may further comprise an identifier of the card scheme.

At step 219, upon reception of the token request, the trusted server 150 obtains the card information that is stored in association with the user identification data comprised in the token request.

At step 220, the trusted server 150 may verify the MAC value comprised in the card challenge, to confirm that the message originates from the card associated with the obtained card information and to confirm the integrity of the card challenge. If the verification of the MAC value is negative, the method may be interrupted, and the trusted server 150 sends a refusal to the web portal 140 in response to the token request. Else, if the verification of the MAC value is positive, the method goes on with step 220. Step 219 is performed only in the embodiments in which the MACed card challenge is included in the token request.

At step 221, the trusted server 150 generates a token based on the card information, and optionally further based on the card challenge (without the MAC value) and/or on the OTP or the timestamp (if included in the token request).

The token may for example combine token plaintext, with the card information, and optionally with the card challenge and/or with the OTP or timestamp.

No restriction is attached to the format of the token and to the way the token is determined based on the card information, the card challenge, and/or the OTP or timestamp.

At step 222, the trusted server 150 may encrypt the token generated at step 220, based on a first key of a keypair that is associated with the card 110 in the trusted server 150. The keypair may further comprise a second key that is stored by the card 110. For example, the first key may be a public key of the card 110 that forms a cryptographic key pair with a secret key that is known and stored by the card 110 only. Alternatively, the first and second keys form an AES or 3DES keypair. This alternative is even more secure as it ensures that only the trusted server can encrypt the generated token.

It is to be noted that the trusted server 150 performs steps 219 to 222 only if the token request originates from a legitimate web portal 140. The trusted server 150 may therefore maintain a list of at least one legitimate web portal and may verify that the token request originates from one of the legitimate web portals of the list, before performing steps 219 to 222. For example, when the trusted server 150 is associated with a bank of the user, the web portal is legitimate if it is the web portal of the bank. If the trusted server 150 is associated with a card scheme, it may maintain a list of legitimate payment portals of service and good providers.

At a step 223, the trusted server 150 transmits the generated token (encrypted or not) to the web portal 140.

At a step 224, the web portal 140 forwards the token to the terminal 120, with an information to be displayed on the terminal to request the user 100 to allow communication between the card 110 and the card communication interface of the terminal 120.

At a step 225, the terminal 120 displays the information requesting the user 100 to allow communication between the card 110 and the card communication interface of the terminal 120. The displayed information may for example indicate to place the card 110 near to or in contact with the terminal 120.

At a step 226, the user 100 manually allows communication between the card 110 and the card communication interface of the terminal 120, for example by placing the card 110 near to or in contact with the terminal 120.

A communication is therefore established between the card 110 and the terminal 120 at a step 227. It is to be noted that, according to the first embodiment in which the user 100 previously allows a first communication at step 211 between the card 110 and the terminal 120, this first communication can be interrupted after step 212, for example because the user 100 removes the card 110 away from the terminal 120. Therefore, in the first embodiment, a second communication is established again between the card 110 and the terminal 120 at step 226.

At step 228, the terminal 120 transmits the token to the card 110.

At a step 229, if the token is encrypted, the card 110 decrypts the token using the second key of the keypair. As explained above, the second key may be the private key of the card 110, or may form an AES or 3DES keypair with the first key.

At a step 230, the card 110 verifies the token, to determine a verification result, indicating whether the token is valid or not.

The card 110 is the only entity that is able to verify the token, because the card 110 stores the card information, and may optionally store the card challenge (generated by the card 110 itself) and the OTP or timestamp (stored at step 212 in the first embodiment).

The card 110 therefore determines the verification result by comparing the token with the stored card information and optionally with the stored card challenge and the stored OTP of timestamp.

The verification result may be based:
- on a first verification of the card information: the card 110 may verify that the card information included in the token is the same as the stored card information;
- on a second verification of the card challenge: the card 110 may verify that the card challenge in the token is the same as the stored card challenge, and/or may verify that the validity duration of the card challenge is valid (i.e. is not expired);
- on a third verification of the OTP or timestamp: the card 110 may verify that the OTP or timestamp included in the token is the same as the OTP or timestamp stored by the card 110 in association with the card challenge, and/or that the time difference between a current time and the value of the timestamp is not greater than a predefined validity period.

Using a validity period for verifying the timestamp and/or the validity duration for the card challenge, enables to ensure a protection against replay attacks.

At a step 231, the card 110 transmits the verification result to the terminal 120.

At a step 232, the terminal 120 provides the verification result to the user, for example by displaying it. When the terminal 120 executes the application 121, the verification result obtained from the card 110 is displayed without being manipulated by the application 121, as the interface between the terminal 120 and the card 110 cannot be accessed by the application 121. This ensures that the portal 140 and application 121 to be checked are not able to manipulate the verification result.

The user 100 is therefore informed that the web portal 140 is legitimate as the web portal 140 has obtained a valid token issued by the trusted server 150. It can therefore go further with exchanging information with the web portal 140.

For example, at a step 233, the user 100 may provide personal or banking information to the terminal 120 to be transmitted to the web portal 140. The personal or banking information is transmitted to the web portal at a step 234.

Figure 3 shows the structure of terminal 120 according to some embodiments of the invention.

The terminal 120 comprises a processor 301 and a memory 302.

The processor 301 may comprise one or multiple microprocessors, a Central Processing Unit (CPU), on a single Integrated Circuit (IC) or several IC chips.

No restriction is attached to the memory 302, which may be any non-transient, tangible form of memory. For example, it can comprise ROM, RAM, EEPROM and/or flash memory. The processor 301 may be programmable and may be configured to execute instructions that are stored in its internal memory or to execute instructions that are stored in the memory 302.

The memory 302 can store instructions for implementing the steps 200 to 202, 204 to 207, 210, 211, 213 to 216, 224, 225, 227, 228, 231 to 233 described above.

The terminal 120 further comprises a user interface 303, such as a graphical user interface; configured to communicate with the user 100. For example, the user interface 303 may comprise a screen, for example a touch screen, arranged for displaying information to the user 100 and to receive touch inputs from the user 100.

The terminal 120 further comprises a card communication interface 304, arranged for communicating with the card 110. The card communication interface 304, as described above, may be a wireless interface, based on short or medium range wireless technologies, such as Near Field Communication, NFC, for example. The card communication interface 304 may be implemented by a mobile application (different from the application 121 described above) or may be a function integrated in the terminal 120, for example natively integrated in the operating system of the terminal 120. The communication between the card communication interface 304 and the card 110 may be based on APDU (Application Protocol Data Unit) sequences. Alternatively, the card communication interface 304 may be a card reader connected to the terminal 120.

The terminal 120 further comprises a network interface 305, such as an IP interface for communicating with the web portal 140 via the extended IP network 130.

The embodiments are described in sufficient detail to enable those of ordinary skill in the art to embody and implement the systems and processes herein described. It is important to understand that embodiments can be provided in many alternate forms and should not be construed as limited to the examples set forth herein.

## Claims

1. A method of verification of a web portal (140) accessed by a terminal (120) of a user (100), the terminal comprising a card communication interface (304) arranged for communicating with a card (110) of the user comprising a chip (111), the card being external to the terminal and storing card information in the chip, the card information being also stored in association with user identification data of the user by a trusted server:
- in response to a user identification request received (209) from the web portal, transmitting (216), by the terminal, user identification data to the web portal;
- upon reception (224), by the terminal and from the web portal, of a token, requesting (225), by the terminal, the user to allow communication between the card and the terminal;
- after establishment (227) of a communication between the card and the terminal, transmitting (228), by the terminal, the token to the card for verification (230) based on the stored card information;
- receiving (231), by the terminal, a verification result from the card;
- providing (232), by the terminal, the verification result to the user.

2. The method according to claim 1, wherein, before receiving (209) the user identification request from the web portal (140), the terminal (120) receives a human verification test (204) from the web portal, wherein the terminal displays (205) the human verification test, and transmits (207) a result of the human verification test to the web portal;
wherein the user identification request is received from the web portal if the human verification test is positive.

3. The method according to claim 2, wherein the human verification test comprises a one time password visual representation, wherein the terminal (120) displays the visual representation and receives (206) a one time password via an input from the user (100).

4. The method according to one of claims 1 to 3, wherein, upon receiving (209) of the user identification request, the terminal (120) requests (210) the user (100) to allow a first communication between the card and the terminal and wherein, after establishment (211) of the first communication, the terminal receives (213) the user identification data from the card (110);
wherein, upon reception (223) of the token, the communication which is requested (224) to be allowed by the user, is a second communication between the card and the terminal.

5. The method according to claims 3 and 4, wherein, after establishment (211) of the first communication, the terminal (120) transmits the one time password to the card for storage (212) in the card;
wherein the terminal transmits the token to the card (110) for verification based at least on the stored card information and on the one time password, to determine the verification result.

6. The method according to claim 4 or 5, wherein, after establishment (211) of the first communication, the terminal (120) receives (213) the user identification data and a card challenge from the card (110);
wherein the terminal transmits (216), in response to the user identification request, the user identification data and the card challenge to the web portal (140); and
wherein the terminal transmits (228) the token to the card for verification based at least one the card information and the card challenge.

7. The method according to claim 6, wherein the terminal (120) receives (213) the card challenge with a Message Authentication Code, from the card (110).

8. The method according to one of the preceding claims, wherein, upon reception (216) of the user identification data, the web portal (140) transmits (218) a token request to the trusted server (150), the token request comprising the user identification data, and the web portal receives (223) the token in response to the token request.

9. The method according to claim 8, wherein, upon reception (218) of the token request, the trusted server (150) retrieves (219) the card information associated with the user identification data, generates (221) the token based at least on the card information; and transmits (223) the token to the web portal (140) in response to the token request.

10. The method according to claim 9, wherein, the trusted server (150) encrypts (222) the generated token based on a first key of a keypair associated with the retrieved card information;
wherein the trusted server transmits (223) the encrypted token to the web portal (140);
wherein the card decrypts (228) the encrypted token before verifying the token, based on a second key of the keypair, the second key being stored by the card.

11. The method according to claim 9 or 10, and to claim 6, wherein the trusted server (150) generates (221) the token based at least on the card information and on the card challenge.

12. The method according to claim 11 and to claim 3, wherein the token request comprises the one time password, and wherein the trusted server (150) generates (221) the token based on the card information, the card challenge and the one time password.

13. A computer program comprising instructions arranged for implementing the method according to one of claims 1 to 7, when said instructions are executed by a processor (301).

14. A terminal (120) comprising a network interface (305) configured for communicating with a web portal (140) via an extended network (130) and comprising a card communication interface (304) arranged for communicating with a card (110) of the user (100), the card being external to the terminal and storing card information, the card information being also stored in association with user identification data of the user by a trusted server (150); wherein the terminal further comprises a processor (301) configured for:
- in response to a user identification request received from the web portal, transmitting user identification data to the web portal;
- upon reception, from the web portal, of a token, requesting the user to allow communication between the card and the terminal via a user interface of the terminal;
- after establishment of a communication between the card and the terminal, transmitting the token to the card for verification based on the stored card information;
- receiving a verification result from the card;
- providing, via the user interface, the verification result to the user.

15. A system (10) comprising a terminal (120) according to claim 14, the card (110) comprising a chip (111) storing the card information, the trusted server (150) storing in association the card information and the user identification data and configured for generating the token, and the web portal (140).
